# EUROPÄISCHE PATENTANMELDUNG

(11) **EP 4 841 208 A1**
(43) Veröffentlichungstag der Anmeldung: **18.11.2026**
(21) Anmeldenummer: 26174595.4
(22) Anmeldetag: 24.04.2026
(51) Int. Cl.: G01B 11/24, G06T 7/60, B23K 26/03, B25J 9/16, B25J 13/08

(54) **VERFAHREN UND VORRICHTUNG ZUR PRÜFUNG DER QUALITÄT VON GEOMETRISCHEN MERKMALEN AUF EINEM BAUTEIL**

(30) Priorität: 16.05.2025 DE 102025119080
(71) Anmelder: VMT Vision Machine Technic Bildverarbeitungssysteme GmbH, 68219 Mannheim (DE)
(72) Erfinder: FIEDLER, Matthias, 68219 Mannheim (DE); HÖFTS, Frank, 68219 Mannheim (DE); OTTO, Marc-André, 68219 Mannheim (DE); DIERIG, Carsten, 68219 Mannheim (DE)
(74) Vertreter: Tergau & Walkenhorst Intellectual Property GmbH

(57) **Zusammenfassung**

Verfahren zur Prüfung der Qualität von geometrischen Merkmalen auf einem Bauteil umfassend wenigstens die Schritte:
einen Schritt a) des Erzeugens einer 3D-Punktewolke des Bauteils umfassend geometrische Merkmale des Bauteils;
einen Schritt b) des Bestimmens einer Verfolgungslinie entlang einer Vorzugsrichtung der geometrischen Merkmale;
einen Schritt c) des Erzeugens einer Mehrzahl an virtuellen zwei-dimensionalen Schnittlinien entlang der Verfolgungslinie;
einen Schritt d) des Prüfens wenigstens eines Qualitätsmerkmals anhand der Mehrzahl virtueller zwei-dimensionaler Schnittlinien aus Schritt c).

## Beschreibung

### Technisches Gebiet

Die vorliegende Erfindung betrifft ein Verfahren und eine Vorrichtung zur Prüfung der Qualität von geometrischen Merkmalen auf einem Bauteil.

### Hintergrund

In der modernen Fertigungstechnik ist die Qualitätssicherung von entscheidender Bedeutung, um die Einhaltung von Produktspezifikationen und die Vermeidung von Ausschuss zu gewährleisten. Traditionell werden geometrische Merkmale von Bauteilen in abtragenden oder applizierenden Verfahren, also bspw. Fräßnuten oder Kleberaupen, durch manuelle Messungen oder einfache optische Verfahren überprüft. Diese Methoden sind jedoch oft zeitaufwendig, fehleranfällig und nicht in der Lage, komplexe Geometrien präzise zu erfassen.

Mit dem Aufkommen der 3D-Sensortechnologie hat sich die Möglichkeit eröffnet, detaillierte 3D-Punktewolken von Bauteilen zu erzeugen und diese für die Qualitätsprüfung zu nutzen. Diese Technologie ermöglicht eine umfassende Erfassung der Geometrie eines Bauteils und bietet eine höhere Genauigkeit und Wiederholbarkeit im Vergleich zu herkömmlichen Methoden

Dennoch bestehen weiterhin Herausforderungen, insbesondere in Bezug auf die effiziente Verarbeitung und Analyse der erzeugten Daten.

Ein weiteres Problem besteht in der Bestimmung und Verfolgung von spezifischen geometrischen Merkmalen innerhalb der 3D-Daten. Die Identifizierung und Analyse dieser Merkmale erfordert fortschrittliche Algorithmen und eine hohe Rechenleistung, was die Implementierung in industriellen Anwendungen erschwert

Zudem ist die Integration solcher Systeme in bestehende Fertigungsprozesse oft komplex und kostspielig.

Insbesondere sind traditionelle Messmethoden sind zeitaufwendig und anfällig für menschliche Fehler. Weiterhin sind im Stand der Technik bekannte herkömmliche Verfahren oft nicht in der Lage, komplexe Geometrien präzise zu erfassen. Zudem ist die Integration fortschrittlicher 3D-Sensorsysteme in bestehende Fertigungsprozesse ist oft komplex und kostspielig.

Diese Herausforderungen verdeutlichen den Bedarf an verbesserten Verfahren und Technologien zur Qualitätssicherung in der Fertigung, die eine präzise, effiziente und kostengünstige Prüfung geometrischer Merkmale ermöglichen.

### Zusammenfassende Beschreibung der Erfindung

Es ist deshalb eine der vorliegenden Erfindung zu Grunde liegende Aufgabe die Nachteile von Verfahren und Vorrichtungen zur Prüfung der Qualität von geometrischen Merkmalen auf einem Bauteil im Stand der Technik zu überwinden.

Diese und andere Probleme werden durch den Gegenstand der beigefügten unabhängigen Ansprüche gelöst.

Bevorzugte Ausführungsformen können den abhängigen Ansprüchen entnommen werden und darüber hinaus aus der folgenden Beschreibung, insbesondere unter Berücksichtigung verschiedener Ausführungsformen, wie sie in den beigefügten Ansprüchen behandelt und beschrieben sind.

Die Ausführungsformen, Merkmale und Kombinationen von Merkmalen, wie sie hier in Verbindung mit der Erfindung beschrieben werden, sowie die Kombination von Merkmalen, wie sie in den beigefügten Ansprüchen angegeben sind, aber auch jede Kombination von Merkmalen, wie sie in Verbindung mit den Ausführungsformen erwähnt und beschrieben wird, gelten als hierin offenbart, zumindest jedoch als durch einen Fachmann herleitbar. Insbesondere kann jedes Merkmal und jede Kombination von Merkmalen in den hier beschriebenen Ausführungsformen beispielsweise in einer anderen Kombination, insbesondere in einer anderen Anspruchskategorie, beansprucht werden, mindestens weil die fachkundige Person erkennen wird, dass jede einzelne Kombination der hier genannten Merkmale geeignet ist, zur Lösung des zugrunde liegenden Problems beizutragen.

Des Weiteren können jedes Merkmal und jede Kombination von Merkmalen in den Ansprüchen und in der untenstehenden Beschreibung unabhängig von dem jeweils beanspruchten Gegenstand, unabhängig von Anspruchsabhängigkeiten und Rückverweisen sowie unabhängig von der Anspruchskategorie, in der das Merkmal beansprucht wird, verwendet und separat beansprucht werden. Beispielsweise kann in einer willkürlichen Kombination, die aus einem oder mehreren Ansprüchen ausgewählt ist, eine oder mehrere Ausführungsformen gemäß der untenstehenden Beschreibung und/oder den beigefügten Abbildungen vorgesehen sein.

Die oben beschriebenen Aufgaben werden erfindungsgemäß gelöst durch ein Verfahren zur Prüfung der Qualität von geometrischen Merkmalen auf einem Bauteil nach der vorliegenden Erfindung.

Diese Verfahren umfasst wenigstens die folgenden Schritte:
einen Schritt a) des Erzeugens einer 3D-Punktewolke des Bauteils umfassend geometrische Merkmale des Bauteils;
einen Schritt b) des Bestimmens einer Verfolgungslinie entlang einer Vorzugsrichtung der geometrischen Merkmale;
einen Schritt c) des Erzeugens einer Mehrzahl an virtuellen zwei-dimensionalen Schnittlinien entlang der Verfolgungslinie;
einen Schritt d) des Prüfens wenigstens eines Qualitätsmerkmals anhand der Mehrzahl virtueller zwei-dimensionaler Schnittlinien aus Schritt c).

Die oben beschriebenen Aufgaben werden ebenfalls erfindungsgemäß gelöst durch eine erfindungsgemäße Vorrichtung zur Durchführung des Verfahrens nach der vorliegenden Erfindung.

Eine derartige Vorrichtung zur Durchführung des Verfahrens nach der vorliegenden Erfindung umfasst einen 3D -Sensor und eine Auswertungseinheit, die dazu eingerichtet ist/sind, eine 3D-Punktewolke des Bauteils umfassend geometrische Merkmale des Bauteils zu erzeugen und eine Verfolgungslinie entlang einer Vorzugsrichtung der geometrischen Merkmale zu bestimmen. Zudem ist die Vorrichtung dazu eingerichtet, eine Mehrzahl an virtuellen zwei-dimensionalen Schnittlinien entlang der Verfolgungslinie zu erzeugen und wenigstens eines Qualitätsmerkmals anhand der Mehrzahl virtueller zwei-dimensionaler Schnittlinien zu prüfen.

Dies ist insbesondere vorteilhaft, da durch die Kombination eines 3D-Sensors mit einer intelligenten Auswertungseinheit eine präzise und automatisierte Erfassung sowie Analyse geometrischer Merkmale auf einem Bauteil ermöglicht wird. Die Erzeugung einer 3D-Punktewolke erlaubt eine vollständige, flächige Erfassung der relevanten Strukturen, wodurch auch komplexe oder schwer zugängliche Merkmale zuverlässig detektiert werden können. Die Bestimmung einer Verfolgungslinie entlang der Vorzugsrichtung der Merkmale gewährleistet eine strukturierte und reproduzierbare Analyse entlang der tatsächlichen Geometrieführung, was insbesondere bei linienförmigen Merkmalen wie Schweißnähten, Kleberaupen oder Fräsnuten von entscheidender Bedeutung ist.

Die Möglichkeit, entlang dieser Verfolgungslinie eine Vielzahl virtueller zweidimensionaler Schnittlinien zu erzeugen, erlaubt eine detaillierte Querschnittsanalyse an beliebigen Stellen der Struktur, ohne dass physische Schnitte oder zusätzliche Sensorbewegungen erforderlich sind. Dies führt zu einer erheblichen Effizienzsteigerung bei gleichzeitiger Erhöhung der Prüfgenauigkeit. Die anschließende Auswertung von Qualitätsmerkmalen auf Basis dieser Schnittlinien ermöglicht eine objektive, datenbasierte Beurteilung der Merkmalsqualität, etwa hinsichtlich Formtreue, Symmetrie oder Maßhaltigkeit. Insgesamt trägt diese Ausführungsform zu einer robusten, skalierbaren und industriell einsetzbaren Lösung für die geometrische Qualitätsprüfung bei.

In einer bevorzugten Ausführungsform der Vorrichtung und/oder des Verfahrens nach der vorliegenden Erfindung ist die Verfolgungslinie durch ein geführtes Werkzeug bereitgestellt, welches das auszuwertende Merkmal erzeugt oder erzeugt hat.

Durch die Bereitstellung der Verfolgungslinie direkt aus dem Werkzeug, das das zu prüfende Merkmal erzeugt hat, wird eine besonders präzise und prozessnahe Referenz für die spätere Qualitätsprüfung geschaffen. Die Verfolgungslinie entspricht in diesem Fall exakt der tatsächlichen Bearbeitungsbahn, entlang der das geometrische Merkmal - etwa eine Schweißnaht, Kleberaupe oder Fräsnut - erzeugt wurde. Dadurch wird sichergestellt, dass die Analyse der Merkmalsqualität entlang der realen Entstehungslinie erfolgt, was die Aussagekraft und Genauigkeit der Prüfung erheblich erhöht.

Zudem entfällt die Notwendigkeit, die Verfolgungslinie nachträglich aus der 3D-Punktewolke zu rekonstruieren, was sowohl Rechenaufwand als auch potenzielle Fehlerquellen reduziert. Die Integration der Werkzeugtrajektorie in die Auswertung erlaubt eine nahtlose Verknüpfung von Fertigungs- und Prüfprozess und eröffnet damit Möglichkeiten zur Echtzeit- oder In-Line-Qualitätskontrolle. Dies führt zu einer erhöhten Prozesssicherheit, einer schnelleren Fehlererkennung und letztlich zu einer effizienteren Produktion mit höherer Produktqualität.

Der Begriff "Werkzeug", wie hierin verwendet, bezeichnet bevorzugt ein technisches Mittel oder eine Vorrichtung, die zur gezielten Erzeugung eines geometrischen Merkmals an einem Bauteil eingesetzt wird. Dies kann insbesondere ein aktives Bearbeitungswerkzeug sein, das im Rahmen eines Fertigungsprozesses - wie Schweißen, Kleben, Fräsen oder Schneiden - entlang einer definierten Trajektorie geführt wird, um eine spezifische Struktur auf oder im Bauteil zu erzeugen. Das Werkzeug ist dabei typischerweise Bestandteil eines automatisierten Systems, etwa eines Roboters oder einer CNC-Maschine, und liefert durch seine Bewegungsdaten (z. B. Positions- oder Bahninformationen) eine präzise Referenz für die spätere Qualitätsprüfung der erzeugten Merkmale. In diesem Zusammenhang dient das Werkzeug nicht nur der Herstellung, sondern auch der Bereitstellung prozessrelevanter Informationen, die für die Analyse und Bewertung der Geometrie von entscheidender Bedeutung sind.

In einer bevorzugten Ausführungsform der Vorrichtung nach der vorliegenden Erfindung ist ein Roboter und eine Robotersteuerung umfasst, die dazu eingerichtet ist, die durch das Werkzeug zur Verfügung gestellte Verfolgungslinie bereitzustellen, wobei die Robotersteuereinheit das Merkmal mittels des Roboters und einem dem vom Roboter geführten Werkzeug erzeugt hat.

Dies ist insbesondere vorteilhaft, da durch die Integration eines Roboters und einer zugehörigen Robotersteuerung eine hochgradig automatisierte und reproduzierbare Erzeugung sowie anschließende Qualitätsprüfung geometrischer Merkmale ermöglicht wird. Die Robotersteuerung stellt dabei nicht nur die Bewegungsführung des Werkzeugs sicher, sondern liefert gleichzeitig präzise Trajektoriendaten, die als Verfolgungslinie für die spätere Auswertung dienen. Diese direkte Kopplung zwischen Fertigungsprozess und Prüfprozess gewährleistet eine exakte räumliche Zuordnung der Qualitätsanalyse zur tatsächlichen Bearbeitungsbahn.

Zudem erlaubt die Verwendung eines Roboters eine flexible Anpassung an unterschiedliche Bauteilgeometrien und Merkmalsverläufe, was insbesondere in variantenreichen Produktionsumgebungen von großem Vorteil ist. Die automatisierte Bereitstellung der Verfolgungslinie reduziert den Aufwand für eine nachträgliche Rekonstruktion aus Sensordaten und minimiert potenzielle Fehlerquellen. Insgesamt trägt diese Ausführungsform zu einer signifikanten Steigerung der Prozesssicherheit, Effizienz und Nachvollziehbarkeit in der geometrischen Qualitätsprüfung bei.

Es sei im Zusammenhang mit dem erfindungsgemäßen Verfahren auch darauf hingewiesen, dass die angegebenen Schritte nicht zwangsläufig in der angegebenen Reihenfolge durchgeführt werden müssen. Die angegebenen Schritte können in jeder anderen geeigneten Reihenfolge oder auch gleichzeitig durchgeführt werden.

Allerdings kann die oben angegebene Reihenfolge für bestimmte Ausführungsformen des erfindungsgemäßen Verfahrens vorteilhaft sein. Gleichzeitig kann zum Beispiel ein Schritt einen Schritt c) des Erzeugens einer Mehrzahl an virtuellen zwei-dimensionalen Schnittlinien entlang der Verfolgungslinie nach einem Schritt b) des Bestimmens einer Verfolgungslinie entlang einer Vorzugsrichtung der geometrischen Merkmale oder sogar gleichzeitig durchgeführt werden.

Es wird zudem von einem Fachmann anerkannt werden, dass ein Merkmal, eine Ausführungsform, eine Wirkung oder ein Vorteil, wie hier in Verbindung mit des erfinderischen Verfahrens beschrieben, auch ein Merkmal, eine Ausführungsform, eine Wirkung oder ein Vorteil der erfinderischen Vorrichtung sein kann, bzw. umgekehrt.

In der vorliegenden Beschreibung und den beigefügten Ansprüchen wird, sofern der Kontext nichts anderes erfordert, das Wort "umfassen" und Variationen wie "umfasst" und "umfassend" so verstanden, dass sie die Einbeziehung eines angegebenen Elements, einer ganzen Zahl oder eines Schritts oder einer Gruppe von Elementen, ganzen Zahlen oder Schritten implizieren, jedoch nicht den Ausschluss eines anderen Elements, einer anderen ganzen Zahl oder eines anderen Schritts oder einer anderen Gruppe von Elementen, ganzen Zahlen oder Schritten, obwohl in einigen Ausführungsformen solche anderen Elemente, ganze Zahlen oder Schritte oder Gruppen von Elementen, ganzen Zahlen oder Schritten ausgeschlossen sein können, d.h. der Gegenstand besteht in der Einbeziehung eines angegebenen Elements, einer ganzen Zahl oder eines Schritts oder einer Gruppe von Elementen, ganzen Zahlen oder Schritten.

Die Begriffe "ein" und "eine" und "das" und ähnliche Referenzen, die im Kontext der Beschreibung der Erfindung (insbesondere im Kontext der Ansprüche) verwendet werden, sind so auszulegen, dass sie sowohl den Singular als auch den Plural abdecken, sofern hierin nicht anders angegeben oder durch den Kontext eindeutig widersprochen. Die Angabe von Wertebereichen dient lediglich als Kurzform, um sich einzeln auf jeden einzelnen Wert innerhalb des Bereichs zu beziehen. Sofern hierin nicht anders angegeben, ist jeder einzelne Wert in die Spezifikation aufgenommen, als ob er hierin einzeln aufgeführt wäre.

Innerhalb der vorliegenden Anmeldung beziehen sich Begriffe wie "seitlich" oder "lateral", "hinten", "vorne", "oben", "unten", "Boden", "gegenüber", "innen", "außen" oder dergleichen, die die Position eines ersten Objekts relativ zu einem anderen Objekt beschreiben, vorzugsweise auf die relative Position eines jeweiligen Teils oder Objekts in Bezug auf seine Position, wenn es vollständig für seinen vorgesehenen Gebrauch montiert ist.

Das erfindungsgemäße Verfahren bzw. die erfindungsgemäße Vorrichtung ist insbesondere vorteilhaft, da die entsprechende Prüfung der Qualität von geometrischen Merkmalen auf einem Bauteil eine präzise und umfassende Analyse der Bauteilgeometrie ermöglicht.

Durch den Schritt a) des Erzeugens einer 3D-Punktewolke des Bauteils werden alle relevanten geometrischen Merkmale erfasst, was eine detaillierte und vollständige Darstellung des Bauteils gewährleistet, was die Wahrscheinlichkeit von Messfehlern reduziert und die Genauigkeit der Qualitätsprüfung erhöht.

Der Schritt b) des Bestimmens einer Verfolgungslinie entlang einer Vorzugsrichtung der geometrischen Merkmale ermöglicht eine gezielte Analyse spezifischer Bereiche des Bauteils.

Durch den Schritt c) des Erzeugens einer Mehrzahl an virtuellen zweidimensionalen Schnittlinien entlang der Verfolgungslinie wird eine umfassende Querschnittsanalyse ermöglicht. Dies erlaubt eine detaillierte Untersuchung der geometrischen Merkmale in verschiedenen Ebenen und Richtungen, was die Erkennung von Abweichungen und Defekten erleichtert.

Schließlich ermöglicht der Schritt d) des Prüfens wenigstens eines Qualitätsmerkmals anhand der Mehrzahl virtueller zweidimensionaler Schnittlinien eine präzise und zuverlässige Bewertung der Bauteilqualität und insbesondere der geometrischen Merkmale des Bauteils.

Dieses Verfahren nach der vorliegenden Erfindung bietet dabei eine besonders präzise und effektive Methode zur Qualitätssicherung, die die Genauigkeit und Zuverlässigkeit der Prüfungen erheblich verbessert und somit die Gesamtqualität der hergestellten Bauteile sichert.

Der Begriff "geometrisches Merkmal", wie er hierin verwendet wird, bezieht sich vorzugsweise auf spezifische physische Eigenschaften eines Bauteils, die durch seine Form, Größe, Lage oder Orientierung definiert sind. Geometrische Merkmale sind entscheidend für die Funktionalität und Passgenauigkeit eines Bauteils und spielen eine zentrale Rolle bei der Qualitätsprüfung und -sicherung in der Fertigungstechnik. Sie dienen als Referenzpunkte für Messungen und Analysen und ermöglichen eine präzise Bewertung der Übereinstimmung eines Bauteils mit den vorgegebenen Spezifikationen. Diese Merkmale können verschiedene Aspekte umfassen, wie z.B. Kanten, Ecken, Flächen, Radien, Bohrungen, Nuten, Schweißnähte oder Kleberaupen.

Der Begriff "3D-Punktewolke", wie er hierin verwendet wird, bezieht sich vorzugsweise auf eine Sammlung von Datenpunkten in einem dreidimensionalen Raum, die die Oberfläche eines Objekts oder Bauteils, insbesondere der geometrischen Merkmale des Bauteils, repräsentieren. Eine 3D-Punktewolke ermöglicht dabei eine präzise Analyse und Visualisierung der Form und Struktur eines Bauteils bzw. der geometrischen Merkmale des Bauteils und dient als Grundlage für weitere Verarbeitungs- und Prüfverfahren in der Fertigungstechnik. Die Punkte der 3D-Punktewolke werden typischerweise durch 3D-Scans oder andere sensorbasierte Messverfahren erfasst und bilden eine detaillierte digitale Darstellung der Geometrie des Objekts bzw. der geometrischen Merkmale.

Der Begriff "Verfolgungslinie", wie er hierin verwendet wird, bezieht sich vorzugsweise auf eine definierte Linie oder Bahn, entlang der spezifische geometrische Merkmale eines Bauteils analysiert oder verfolgt werden. Diese Linie dient als Referenz für die Untersuchung und Bewertung der Qualität der Merkmale und ermöglicht eine gezielte und systematische Analyse entlang einer bevorzugten Richtung. Die Verfolgungslinie kann durch verschiedene Methoden bestimmt werden, wie z.B. durch das Festlegen einer Spline oder durch die Berechnung der Bearbeitungsbahn, die bei der Erzeugung der geometrischen Merkmale verwendet wurde.

Der Begriff "Vorzugsrichtung", wie er hierin verwendet wird, bezieht sich vorzugsweise auf die bevorzugte oder optimale Richtung, entlang der ein spezifisches geometrisches Merkmal eines Bauteils analysiert oder bearbeitet wird. Diese Richtung wird oft durch die natürliche Ausrichtung oder Struktur des Merkmals bestimmt und dient als Referenz für die Durchführung von Messungen, Prüfungen oder Bearbeitungsschritten. Die Vorzugsrichtung ermöglicht eine gezielte und effiziente Analyse und Bearbeitung, indem sie die relevanten Merkmale entlang ihrer optimalen Ausrichtung erfasst und bewertet.

Im Rahmen des erfindungsgemäßen Verfahrens werden "virtuelle zwei-dimensionale Schnittlinie entlang der Verfolgungslinie" erzeugt. Darunter ist, wie er hierin verwendet, bevorzugt zu verstehen, dass eine Reihe von zweidimensionalen Querschnitten entlang einer definierten Verfolgungslinie durch ein dreidimensionales Modell eines Bauteils erzeugt werden. Diese Schnittlinien dienen dazu, die Geometrie und die Merkmale des Bauteils in verschiedenen Ebenen zu analysieren und zu bewerten. Durch die Erzeugung dieser virtuellen Schnittlinien können spezifische Qualitätsmerkmale präzise untersucht und eventuelle Abweichungen oder Defekte identifiziert werden. Die Schnittlinien sind dabei virtuell, da sie nicht physisch existieren, sondern durch computergestützte Verfahren aus den 3D-Daten des Bauteils abgeleitet werden.

Im Schritt d) des Verfahrens nach der vorliegenden Erfindung wird wenigstens ein Qualitätsmerkmal geprüft. Darunter ist vorzugsweise ein Prozess der Bewertung und Überprüfung mindestens eines spezifischen Merkmals des Bauteils bzw. der geometrischen Merkmale zu verstehen, das für dessen Qualität entscheidend ist.

Der Begriff "Qualitätsmerkmal", wie hierin verwendet, bezeichnet bevorzugt eine mess- oder bewertbare Eigenschaft eines geometrischen Merkmals auf einem Bauteil, die Rückschlüsse auf die Güte, Integrität oder Funktionsfähigkeit des Merkmals zulässt. Solche Merkmale können beispielsweise die Formtreue, die Symmetrie, die Breite oder Höhe einer Struktur - wie etwa einer Kleberaupe, Schweißnaht oder Fräsnut - umfassen. Ein Qualitätsmerkmal kann auch das Vorhandensein oder Fehlen von Unregelmäßigkeiten wie Einbrüchen, Lufteinschlüssen oder Materialdefekten sein, die sich in den virtuellen Schnittbildern entlang einer Verfolgungslinie abbilden. Darüber hinaus können auch geometrische Abweichungen von einer Sollform, etwa in Bezug auf die Lage der Verfolgungslinie (z. B. ein Spline) oder den Abstand zwischen den virtuellen Schnitten, als Qualitätsmerkmale herangezogen werden. Diese Merkmale dienen der objektiven Beurteilung, ob das erzeugte Bauteil den vorgegebenen Spezifikationen entspricht, und ermöglichen eine automatisierte, datenbasierte Qualitätskontrolle im Rahmen eines bildgebenden Prüfverfahrens. Die Qualitätsmerkmale können verschiedene Aspekte umfassen, wie Maßhaltigkeit, Oberflächenbeschaffenheit, Materialeigenschaften oder funktionale Merkmale.

Das Prüfen dieser Merkmale erfolgt anhand definierter Kriterien und Toleranzen, um sicherzustellen, dass das Bauteil den vorgegebenen Spezifikationen entspricht und keine Mängel aufweist. Dieser Prozess ist entscheidend für die Qualitätssicherung und die Gewährleistung der Zuverlässigkeit und Leistungsfähigkeit des Bauteils.

In einer bevorzugten Ausführungsform des erfindungsgemäßen Verfahrens und/oder der erfindungsgemäßen Vorrichtung umfasst das Bestimmen der Verfolgungslinie in Schritt b) das Festlegen einer Spline.

Dies ist insbesondere vorteilhaft, da das Festlegen einer Spline im Schritt b) des Bestimmens der Verfolgungslinie eine präzise und flexible Anpassung der Verfolgungslinie entlang der geometrischen Merkmale des Bauteils ermöglicht.

Der Begriff "Spline", wie er hierin verwendet wird, bezieht sich vorzugsweise auf eine mathematische Funktion oder Kurve, die verwendet wird, um eine glatte und kontinuierliche Linie durch eine Reihe von Kontrollpunkten zu ziehen. Splines sind besonders nützlich in der Computergrafik, im CAD (Computer-Aided Design) und in der Fertigungstechnik, da sie eine präzise Modellierung und Anpassung komplexer Formen und Strukturen ermöglichen. Durch die Verwendung von Splines in der vorliegenden Erfindung können geometrische Merkmale eines Bauteils genau und flexibel dargestellt werden. Dies führt zu einer verbesserten Genauigkeit bei der Analyse und Bewertung der geometrischen Merkmale, da die Spline eine optimale Anpassung an die tatsächliche Geometrie des Bauteils bietet.

Darüber hinaus ermöglicht die Verwendung von Splines eine effiziente Berechnung und Verarbeitung der Verfolgungslinie, was die Geschwindigkeit und Effizienz des Prüfverfahrens erhöht. Dies ist besonders vorteilhaft in industriellen Anwendungen, wo eine schnelle und zuverlässige Qualitätsprüfung entscheidend ist. Die Flexibilität der Spline-Technologie erlaubt es, die Verfolgungslinie dynamisch anzupassen und zu optimieren, um die besten Ergebnisse zu erzielen.

In einer weiteren bevorzugten Ausführungsform des erfindungsgemäßen Verfahrens und/oder der erfindungsgemäßen Vorrichtung umfasst das Bestimmen der Verfolgungslinie entlang einer Vorzugsrichtung der geometrischen Merkmale in Schritt b) ein Berechnen der bei einer Erzeugung der geometrischen Merkmale beim Bearbeiten des Bauteils verwendeten Bearbeitungsbahn.

Dies ist insbesondere vorteilhaft, da das Berechnen der Bearbeitungsbahn, die bei der Erzeugung der geometrischen Merkmale verwendet wurde, eine präzise und zuverlässige Bestimmung der Verfolgungslinie entlang der Vorzugsrichtung der Merkmale ermöglicht. Durch die Nutzung der Bearbeitungsbahn, die bereits während der Herstellung des Bauteils festgelegt wurde, kann die Verfolgungslinie exakt an die tatsächlich gewünschte Geometrie und Struktur des Bauteils und insbesondere der geometrischen Merkmale angepasst werden. Mit anderen Worten dient die Bearbeitungsbahn als Referenzwert für einen Sollzustand der Verfolgungslinie, mit dem der durch das erfindungsgemäße Verfahren vorgenommene Prüfschritt d) des Prüfens wenigstens eines Qualitätsmerkmals an Hand der Mehrzahl virtueller zwei-dimensionaler Schnittlinien aus Schritt c) eine Abweichung von der Bearbeitungsbahn leicht feststellbar macht.

Darüber hinaus ermöglicht diese Ausführungsform eine besonders effiziente und schnelle Berechnung der Verfolgungslinie, da die Bearbeitungsbahn bereits vorhandene Daten nutzt, die während des Herstellungsprozesses generiert wurden.

In einer weiteren bevorzugten Ausführungsform des erfindungsgemäßen Verfahrens und/oder der erfindungsgemäßen Vorrichtung erfolgt das Erzeugen der 3D-Punktewolke des Bauteils in Schritt a) durch einen flächig aufnehmenden 3D-Sensor.

Dies ist insbesondere vorteilhaft, da das Erzeugen der 3D-Punktewolke des Bauteils durch einen flächig aufnehmenden 3D-Sensor eine umfassende und detaillierte Erfassung der Geometrie des Bauteils ermöglicht. Ein flächig aufnehmender 3D-Sensor kann dabei relativ große Bereiche des Bauteils in einem einzigen Durchgang erfassen, was die Effizienz und Geschwindigkeit des Prüfverfahrens erheblich steigert.

Der Begriff "flächig aufnehmender 3D-Sensor", wie er hierin verwendet wird, bezieht sich dabei vorzugsweise auf einen Sensor, der in der Lage ist, die Oberfläche eines Objekts oder Bauteils in einem dreidimensionalen Raum umfassend und detailliert zu erfassen. Ein solcher Sensor verwendet typischerweise eine oder mehrere 3D-Kameras oder andere optische Erfassungstechnologien, die insbesondere in verschiedenen Winkeln angeordnet sein können, um eine vollständige und präzise Aufnahme der Geometrie des Bauteils zu ermöglichen. Durch die flächige Aufnahme wird eine umfassende 3D-Punktewolke erzeugt, die eine genaue und detaillierte Analyse der geometrischen Merkmale des Bauteils ermöglicht.

Der 3D Sensor umfasst dabei bevorzugt wenigstens eine 3D Kamera, weiter bevorzugt zwei oder mehr 3D Kameras.

Insbesondere durch die Verwendung mehrerer 3D-Kameras, die in unterschiedlichen Winkeln angeordnet sind, wird eine vollständige und präzise Erfassung der Oberfläche des Bauteils gewährleistet. Dies führt zu einer höheren Genauigkeit bei der Erstellung der 3D-Punktewolke und ermöglicht eine detaillierte Analyse der geometrischen Merkmale.

Darüber hinaus reduziert die flächige Aufnahme die Notwendigkeit für mehrere Messdurchgänge und minimiert somit den Zeitaufwand und die Komplexität des Prüfprozesses.

In einer weiteren bevorzugten Ausführungsform des erfindungsgemäßen Verfahrens und/oder der erfindungsgemäßen Vorrichtung umfasst das Erzeugen der 3D-Punktewolke des Bauteils in Schritt a) das Erzeugen einer optischen Einzel-aufnahme der Gesamtheit der zu überprüfenden geometrischen Merkmale des Bau-teils, bevorzugt des gesamten Bauteilsumfasst (single shot).

Das Erzeugen einer optischen Einzelaufnahme der Gesamtheit der zu überprüfenden geometrischen Merkmale des Bauteils, bevorzugt des gesamten Bauteils, erlaubt eine besonders effiziente Erfassung der gesamten Geometrie des Bauteils. Durch die Verwendung einer derartigen Einzelaufnahme (single shot) wird der gesamte Bereich des Bauteils in einem einzigen Durchgang erfasst, was den Zeitaufwand für die Datenerfassung erheblich reduziert und die Effizienz des Prüfverfahrens steigert. Diese Ausführungsform minimiert dabei insbesondere die Notwendigkeit für mehrere Messdurchgänge und reduziert somit die Komplexität und den Aufwand des Prüfprozesses.

In einer weiteren bevorzugten Ausführungsform des erfindungsgemäßen Verfahrens und/oder der erfindungsgemäßen Vorrichtung erfolgt der Schritt a) des Erzeugens einer 3D-Punktewolke des Bauteils umfassend geometrische Merkmale des Bauteils, mittels eines geführten Profilschnitt-Sensors.

Ein "geführter Profilschnitt-Sensor", wie er hierin verwendet wird, bezeichnet vorzugsweise auf einen Sensor, der in der Lage ist, die Profilgeometrie eines Objekts oder Bauteils, insbesondere der geometrischen Merkmale, präzise zu erfassen, indem er eine definierte Schnittlinie entlang der Oberfläche des Objekts, bzw. der geometrischen Merkmale, verfolgt. Ein solcher Sensor verwendet typischerweise Laser- oder optische Technologien, um eine Reihe von Datenpunkten entlang der Schnittlinie zu erfassen und daraus ein detailliertes Profil des Objekts zu erstellen.

Dies ist insbesondere vorteilhaft, da der Schritt a) des Erzeugens einer 3D-Punktewolke des Bauteils mittels eines geführten Profilschnitt-Sensors eine präzise und detaillierte Erfassung der geometrischen Merkmale des Bauteils ermöglicht.

Durch die geführte Bewegung des Sensors wird eine konsistente und zuverlässige Erfassung der Geometrie des Bauteils sichergestellt, was die Qualität der erzeugten 3D-Punktewolke erheblich verbessert. Darüber hinaus ermöglicht die Verwendung eines geführten Profilschnitt-Sensors eine effiziente und schnelle Datenerfassung, da der Sensor kontinuierlich entlang der Verfolgungslinie bewegt wird und dabei eine große Menge an Datenpunkten in kurzer Zeit erfasst.

In einer weiteren bevorzugten Ausführungsform des erfindungsgemäßen Verfahrens und/oder der erfindungsgemäßen Vorrichtung ist die 3D Punktewolke eine flächig ausgedehnte 3D Punktewolke.

Der Begriff "flächig ausgedehnte 3D-Punktewolke", wie er hierin verwendet wird, bezieht sich vorzugsweise auf eine dreidimensionale Sammlung von Datenpunkten, die eine große Fläche oder das gesamte Volumen eines Bauteils oder geometrischer Merkmale repräsentieren. Diese Punktewolke wird durch die Erfassung der Oberfläche des Objekts bzw. geometrischer Merkmale mittels eines 3D-Sensor erzeugt und bietet eine detaillierte und umfassende Darstellung der Geometrie des Objekts. Eine flächig ausgedehnte 3D-Punktewolke ermöglicht dabei eine präzise Analyse und Bewertung der geometrischen Merkmale über eine große Fläche, was besonders vorteilhaft für die Qualitätsprüfung und -sicherung nach der vorliegenden Erfindung ist.

In einer weiteren bevorzugten Ausführungsform des erfindungsgemäßen Verfahrens und/oder der erfindungsgemäßen Vorrichtung erfolgt ein Schritt b) des Bestimmens einer Verfolgungslinie im Wesentlichen mittig entlang der Vorzugsrichtung der geometrischen Merkmale. Das Bestimmen einer Verfolgungslinie im Wesentlichen mittig entlang der Vorzugsrichtung der geometrischen Merkmale erlaubt eine besonders präzise und konsistente Analyse der relevanten geometrischen Merkmale des Bauteils. Durch die mittige Ausrichtung der Verfolgungslinie wird sichergestellt, dass die Linie optimal entlang der zentralen Achse der geometrischen Merkmale verläuft, was zu einer gleichmäßigen und detaillierten Erfassung der Merkmale führt.

In einer weiteren bevorzugten Ausführungsform des erfindungsgemäßen Verfahrens und/oder der erfindungsgemäßen Vorrichtung ist in dem Schritt c) des Erzeugens einer Mehrzahl der virtuellen zwei-dimensionalen Schnittlinien entlang der Verfolgungslinie, die zwei-dimensionalen Schnittlinien orthogonal zur Verfolgungslinie angeordnet sind.

Die Anordnung der zweidimensionalen Schnittlinien orthogonal zur Verfolgungslinie in Schritt c) ist insbesondere vorteilhaft, da deine präzise und detaillierte Analyse der geometrischen Merkmale des Bauteils ermöglicht wird. Durch die orthogonale Ausrichtung der Schnittlinien wird sichergestellt, dass die Querschnitte die Merkmale in einem rechten Winkel schneiden, was zu einer klaren und eindeutigen Darstellung der Profilgeometrie führt. Durch die orthogonalen Schnittlinien wird damit eine konsistente und gleichmäßige Erfassung der Merkmale entlang der gesamten Verfolgungslinie gewährleistet und die Wahrscheinlichkeit von Messfehlern reduziert, sowie eine präzise Identifizierung von Abweichungen und Defekten ermöglicht.

In einer weiteren bevorzugten Ausführungsform des erfindungsgemäßen Verfahrens und/oder der erfindungsgemäßen Vorrichtung sind die geometrischen Merkmale, geometrische Merkmale einer Applikationsstruktur, insbesondere einer PVC-Naht oder einer Schweißnaht oder einer Kleberaupe.

Die vorliegende Erfindung ist ganz besonders vorteilhaft, wenn die geometrischen Merkmale, die Merkmale einer Applikationsstruktur sind. Eine Applikationsstruktur kann insbesondere einer PVC-Naht, einer Schweißnaht oder einer Kleberaupe sein. Eine Applikationsstruktur stellt häufig kritische Bereiche eines Bauteils dar, die für dessen Funktionalität und Integrität entscheidend sind. Durch die gezielte Prüfung dieser Merkmale, bspw. einer Schweißnaht, kann sichergestellt werden, dass die Verbindungen und Dichtungen den erforderlichen Qualitätsstandards entsprechen und keine Schwachstellen aufweisen.

Die Prüfung von Applikationsstrukturen wie PVC-Nähten, Schweißnähten oder Kleberaupen ermöglicht demnach eine frühzeitige Erkennung von Defekten wie Rissen, Lücken oder ungleichmäßigen Materialverteilungen, die die Leistungsfähigkeit und Lebensdauer des Bauteils beeinträchtigen könnten. Dabei ermöglicht die vorliegende Erfindung die gezielte Analyse dieser spezifischen Merkmale eine effiziente und fokussierte Qualitätsprüfung, die den Prüfprozess beschleunigt und die Genauigkeit der Ergebnisse erhöht. Dies führt zu einer höheren Produktivität und einer Reduzierung der Kosten, da potenzielle Probleme frühzeitig erkannt und behoben werden können, bevor sie zu größeren Ausfällen oder Rückrufen führen.

Ebenfalls kann die vorliegende Erfindung eingesetzt werden, wenn abtragende Verfahren eingesetzt werden. In einer weiteren bevorzugten Ausführungsform des erfindungsgemäßen Verfahrens und/oder der erfindungsgemäßen Vorrichtung sind die geometrischen Merkmale, geometrische Merkmale einer Abtragung, insbesondere einer Fräs- oder Schneide-Nut.

Abtragende Verfahren sind in der Fertigungstechnik weit verbreitet und erfordern eine präzise Kontrolle und Überprüfung der erzeugten Merkmale, um die Qualität und Funktionalität der Bauteile sicherzustellen. Durch die gezielte Prüfung der geometrischen Merkmale von Fräs- oder Schneide-Nuten kann mittels der vorliegenden Erfindung sichergestellt werden, dass diese Merkmale den vorgegebenen Spezifikationen entsprechen und keine Defekte oder Abweichungen aufweisen, die die Leistungsfähigkeit des Bauteils beeinträchtigen könnten.

### Kurzbeschreibung der Figuren

Die vorliegende Erfindung wird im Folgenden ausführlicher erläutert unter Bezugnahme auf die Zeichnungen, aus denen weitere Merkmale, Ausführungsformen und Vorteile entnommen werden können. In den in den Abbildungen gezeigten Ausführungsformen werden Elemente, die ähnliche oder identische Funktionen haben, mit gleichen Bezugszeichen versehen. Es wird darauf hingewiesen, dass die Abbildungen möglicherweise nicht maßstabsgetreu zueinander sind.

Dabei zeigt:
FIG 1 eine Vorrichtung nach einer Ausführungsform der vorliegenden Erfindung; und
FIG 2 eine 3D-topografische Darstellung von gemäß dem erfindungsgemäßen Verfahren erzeugter Schnitte entlang einer Verfolgungslinie.

### Detaillierte Beschreibung

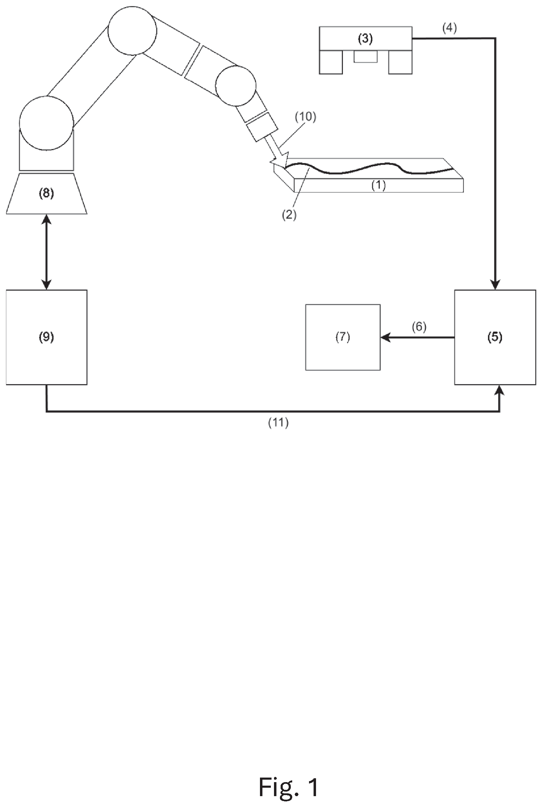

Fig. 1 zeigt eine schematische Darstellung einer Vorrichtung zur Durchführung eines Verfahrens zur Prüfung der Qualität von geometrischen Merkmalen 2 auf einem Bauteil 1. Die Vorrichtung umfasst einen 3D-Sensor 3, der bevorzugt als flächig aufnehmender 3D-Punktewolkensensor ausgebildet ist. Der 3D-Sensor 3 ist dazu eingerichtet, eine 3D-Punktewolke des Bauteils 1 zu erzeugen, welche die geometrischen Merkmale 2 vollständig erfasst. Die dabei erfassten Daten 4, welche die Szene bestehend aus dem Bauteil 1 und den geometrischen Merkmalen 2 metrisch repräsentieren, werden an eine Auswertungseinheit 5 übertragen, die bevorzugt als PC ausgebildet ist.

Die Auswertungseinheit 5 ist dazu eingerichtet, entlang einer Verfolgungslinie virtuelle zwei-dimensionale Schnittlinien zu erzeugen und anhand dieser wenigstens ein Qualitätsmerkmal zu prüfen. Die Verfolgungslinie kann dabei insbesondere durch ein Werkzeug 10 bereitgestellt werden, welches das geometrische Merkmal 2 erzeugt hat. Die Vorrichtung umfasst weiterhin einen Roboter 8 sowie eine Robotersteuerung 9. Die Robotersteuerung 9 ist dazu eingerichtet, die Verfolgungslinie bereitzustellen, wobei das Werkzeug 10 vom Roboter 8 geführt wird und das geometrische Merkmal 2 erzeugt hat. Die dabei verwendete Trajektorie 11 wird an die Auswertungseinheit 5 übermittelt.

Die Auswertungseinheit 5 verarbeitet die empfangenen Daten 4 und führt eine Analyse der virtuellen Schnittlinien durch, um die Qualität der geometrischen Merkmale 2 zu bewerten. Die Ergebnisse 6 dieser Analyse können gespeichert oder optional an ein übergeordnetes System 7 weitergeleitet werden.

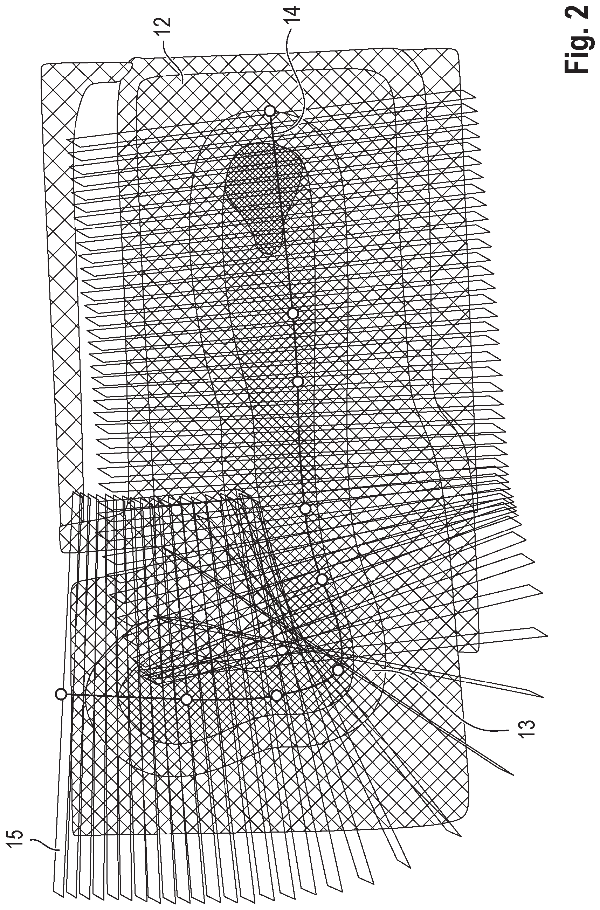

In Fig. 2 ist eine 3D-topografische Darstellung von gemäß dem erfindungsgemäßen Verfahren erzeugter Schnitte entlang einer Verfolgungslinie dargestellt. Daraus ist ersichtlich, wie Schnitte 15 entlang einer Verfolgungslinie 14 durch die Punktewolke 12 gelegt werden um das zu untersuchende Merkmal 13 auswerten zu können.

### Referenzzeichenliste

1 - Bauteil
2 - Geometrisches Merkmal / Merkmal
3 - 3D-Sensor / 3D-Punktewolkensensor
4 - Daten (metrische Repräsentation der Szene)
5 - Auswertungseinheit
6 - Ergebnisse
7 - Übergeordnetes System
8 - Roboter
9 - Robotersteuerung / Robotersteuereinheit
10 - Werkzeug
11 - Trajektorie
12 - Punktewolke
13 - Zu untersuchendes Merkmal
14 - Verfolgungslinie
15 - Virtuelle Schnitte

## Patentansprüche

1. Verfahren zur Prüfung der Qualität von geometrischen Merkmalen auf einem Bauteil umfassend wenigstens die Schritte:
einen Schritt a) des Erzeugens einer 3D-Punktewolke des Bauteils umfassend geometrische Merkmale des Bauteils;
einen Schritt b) des Bestimmens einer Verfolgungslinie entlang einer Vorzugsrichtung der geometrischen Merkmale;
einen Schritt c) des Erzeugens einer Mehrzahl an virtuellen zwei-dimensionalen Schnittlinien entlang der Verfolgungslinie;
einen Schritt d) des Prüfens wenigstens eines Qualitätsmerkmals an Hand der Mehrzahl virtueller zwei-dimensionaler Schnittlinien aus Schritt c).

2. Verfahren nach Anspruch 1, wobei das Bestimmen der Verfolgungslinie in Schritt b) das Festlegen einer Spline umfasst.

3. Verfahren nach einem der vorhergehenden Ansprüche, wobei das Bestimmen der Verfolgungslinie entlang einer Vorzugsrichtung der geometrischen Merkmale in Schritt b) ein Berechnen der bei einer Erzeugung der geometrischen Merkmale beim Bearbeiten des Bauteils verwendeten Bearbeitungsbahn umfasst.

4. Verfahren nach einem der vorhergehenden Ansprüche, wobei das Erzeugen der 3D-Punktewolke des Bauteils in Schritt a) durch einen flächig aufnehmenden 3D-Sensor erfolgt, der bevorzugt wenigstens eine 3D Kamera, weiter bevorzugt zwei oder mehr 3D Kameras umfasst.

5. Verfahren nach einem der vorhergehenden Ansprüche, wobei das Erzeugen der 3D-Punktewolke des Bauteils in Schritt a) das Erzeugen einer optischen Einzelaufnahme der Gesamtheit der zu überprüfenden geometrischen Merkmale des Bauteils, bevorzugt des gesamten Bauteils umfasst (single shot) umfasst.

6. Verfahren nach einem der vorhergehenden Ansprüche, wobei der Schritt a) des Erzeugens einer 3D-Punktewolke des Bauteils umfassend geometrische Merkmale des Bauteils, mittels eines geführten Profilschnitt-Sensor erfolgt.

7. Verfahren nach einem der vorhergehenden Ansprüche, wobei die 3D Punktewolke eine flächig ausgedehnte 3D Punktewolke ist

8. Verfahren nach einem der vorhergehenden Ansprüche, wobei einen Schritt b) des Bestimmens einer Verfolgungslinie im Wesentlichen mittig entlang der Vorzugsrichtung der geometrischen Merkmale erfolgt.

9. Verfahren nach einem der vorhergehenden Ansprüche, wobei in dem Schritt c) des Erzeugens einer Mehrzahl der virtuellen zwei-dimensionalen Schnittlinien entlang der Verfolgungslinie, die zwei-dimensionalen Schnittlinien orthogonal zur Verfolgungslinie angeordnet sind.

10. Verfahren nach einem der vorhergehenden Ansprüche, wobei die geometrischen Merkmale, geometrische Merkmale einer Applikationsstruktur, insbesondere einer PVC-Naht oder einer Schweißnaht oder einer Kleberaupe sind.

11. Verfahren nach einem der vorhergehenden Ansprüche, wobei die geometrischen Merkmale, geometrische Merkmale einer Abtragung, insbesondere einer Fräs- oder Schneide-Nut sind.

12. Vorrichtung zur Durchführung des Verfahrens einem der vorhergehenden Ansprüche, umfassend einen 3D -Sensor (3) und eine Auswertungseinheit (5), dazu eingerichtet, eine 3D-Punktewolke des Bauteils umfassend geometrische Merkmale (2) des Bauteils (1) zu erzeugen und einer Verfolgungslinie entlang einer Vorzugsrichtung der geometrischen Merkmale zu bestimmen, einer Mehrzahl an virtuellen zwei-dimensionalen Schnittlinien entlang der Verfolgungslinie zu erzeugen und wenigstens eines Qualitätsmerkmals an Hand der Mehrzahl virtueller zwei-dimensionaler Schnittlinien zu prüfen.

13. Vorrichtung nach Anspruch 12, wobei die Verfolgungslinie durch ein geführtes Werkzeug (10) bereitgestellt ist, welches das auszuwertende Merkmal (2) erzeugt hat.

14. Vorrichtung nach Anspruch 12 oder 13, umfassend einen Roboter (8) und eine Robotersteuerung (9), die dazu eingerichtet ist, die durch das Werkzeug zur Verfügung gestellte Verfolgungslinie bereitzustellen, wobei die Robotersteuereinheit (9) das Merkmal mittels des Roboters (8) und einem dem vom Roboter geführten Werkzeug (10) erzeugt hat.
